# EUROPEAN PATENT APPLICATION

(11) **EP 3 276 969 A1**
(43) Date of publication of application: **31.01.2018**
(21) Application number: 16181463.7
(22) Date of filing: 27.07.2016
(51) Int. Cl.: H04N 21/25, H04N 21/442, H04N 21/45

(54) **CONTENT PRESENTATION DEVICE AND METHOD**

(71) Applicant: Advanced Digital Broadcast S.A., 1292 Chambesy (CH)
(72) Inventor: Dabrowa, Andrzej, 65-119 Zielona Gora (PL)
(74) Representative: Kancelaria Eupatent.pl Sp. z.o.o

(57) **Abstract**

A computer-implemented method for presenting content items to a user of a device having a network interface and a controller configured to generate a graphical user interface, the method comprising performing the following steps within the device: receiving (602), from a program guide data provider (130) accessible over the network (150), program guide data for a plurality of content items; generating (603) a graphical program guide to display program guide data for the plurality of content items; allowing the user to select (604) a content item of interest; extracting (605) from the program guide data, extended information for the selected content item; presenting the extended information for the selected content item. The method further comprises extracting (605) from the program guide data an URL for a trailer video clip accessible over the network (150) from a trailer video clip provider (160); accessing (606) the trailer video clip; and presenting (607) the trailer video clip for the selected content item.

## Description

### TECHNICAL FIELD

The present disclosure relates to presentation and management of content items in a program guide for video content.

### BACKGROUND

With the development of modern audio/video technologies, people can instantly access large amount of content at any given time from various sources. This requires a tool that can help the users to conveniently browse available content to find a content item of interest. This can be achieved by a program guide that presents available content items along with additional information, so that the user can learn more about the content before deciding which content item to watch or record.

A well known method of presenting available content is a grid-type electronic programme guide (EPG) or interactive program guide (IPG), which typically has a timeline along its X axis and lists available channels on a Y axis, wherein programmes available at a particular channel at a particular time are presented in cells within the grid.

The existing program guide systems allow presentation of content items not only with basic data, such as content item title or genre, but also extended information, such as detailed description and/or a preview image.

There is a need to further improve the way the content is presented to the user, in order to achieve at least one of the effects of: providing even more extended content information so that the user can learn more about the content before deciding which content item to select for further actions (such as watching or recording), reducing of the time and/or number of actions to be performed by the user to obtain extended content information, improving the usability of the program guide, efficient use of hardware and/or software resources of a device that presents the recommended content to the user.

### SUMMARY

There is disclosed a computer-implemented method for presenting content items to a user of a device having a network interface and a controller configured to generate a graphical user interface, the method comprising performing the following steps within the device: receiving, from a program guide data provider accessible over the network, program guide data for a plurality of content items; generating a graphical program guide to display program guide data for the plurality of content items; allowing the user to select a content item of interest; extracting from the program guide data, extended information for the selected content item; presenting the extended information for the selected content item. The method comprises extracting from the program guide data an URL for a trailer video clip accessible over the network from a trailer video clip provider; accessing the trailer video clip; and presenting the trailer video clip for the selected content item.

The method may further comprise, prior to presenting the trailer video clip, checking whether the parental rating for the selected content item complies with the parental settings for the user or the device.

The method may further comprise, prior to presenting the trailer video clip, waiting for a predetermined delay time.

The delay time can be selected from a plurality of predetermined delay times.

The method may comprise presenting the trailer video clip in a loop.

The method may comprise, presenting the trailer video clip in a reduced window within the program guide screen along with program guide data.

The method may comprise presenting the trailer video clip in a full-screen window.

The method may comprise, upon accessing the trailer video clip, storing the trailer video clip in the memory of the device.

There is also disclosed a non-transitory computer readable storage medium comprising instructions that, when executed by a computer, enable presenting content items to a user of a device in accordance with the method as described above.

There is also disclosed a device comprising: a network interface configured to allow communication with external services over a network; and a controller configured to generate a graphical user interface and to perform the steps of the method as described above.

### BRIEF DESCRIPTION OF DRAWINGS

The disclosure is accompanied by the drawing, wherein:
Fig. 1 presents an overview of a general content distribution system.
Fig. 2 presents an overview of a content distribution system at a user premises.
Fig. 3 presents a block diagram of a mobile device at which the content presentation system can be implemented.
Fig. 4 presents a block diagram of a stationary device at which the content presentation system can be implemented.
Fig. 5A presents data stored in user device memory.
Fig. 5B presents configuration of trailer presentation modes.
Fig. 5C presents configuration of trailer presentation parameters.
Fig. 6 presents in general a method for presenting extended content data in a form of a trailer video clip.
Figs. 7A-7B show a method for presentation of a trailer in an auto-preview mode.
Fig. 8 shows a method for presentation of a trailer in a full-screen mode.
Fig. 9 presents an embodiment of a program guide presentation scheme that allows auto-preview mode for watching trailers.
Figs. 10A-B present an embodiment of a program guide presentation scheme that allows auto-preview mode for watching trailers

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

The presented system and method are aimed for efficient presentation of extended content information in the form of video trailers. This is particularly useful for presenting extended data for movies, but also any other video content. A trailer is defined as a pre-recorded video clip that is distinct from the main video clip to which it relates. A trailer typically comprises a pre-arranged set of main video clip fragments that are designed to catch the user's attention and attract the user to watch the main video clip. The trailer typically has a length from a few seconds to a few minutes.

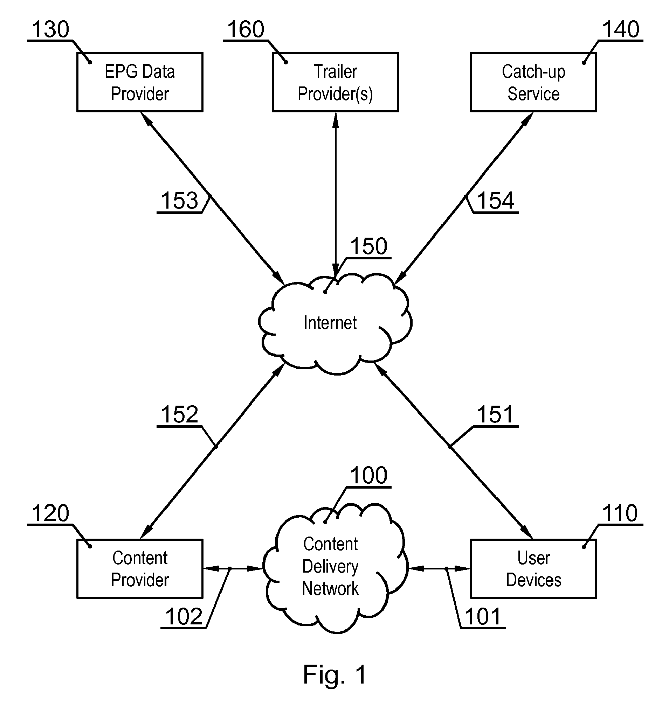

Fig. 1 presents an overview of a general content distribution system. Content can be provided to user devices 110 by various distributors from various sources. A content provider 120 may provide linear TV content, such as time-and-channel based television, live broadcasts etc, to a content delivery network 100, which may be broadcast, multicast or unicast. The user is connected with the content delivery network via a transmission channel 101, such as a QAM, Satellite, Terrestrial, IP multicast network or other type of network. Additional services are available to the user devices 110 linked via a transmission channel 151 with the Internet 150 (or through the content provider 120 connected via a transmission channel 152 with the Internet and via a transmission channel 102 with the content delivery network 110) and include at least some of the following.

A catch-up service 140 is configured to provide, via a transmission channel 154, retransmission the content that has been already broadcast as linear TV, in order to allow the users to watch it a few hours or even days later.

An Electronic Program Guide (EPG) data provider 130 is configured to provide, via a transmission channel 153, additional data about content available from various sources, including the content available from the content delivery network 100 and the other content providers 140, 160. As part of the EPG data related to extended information for content items, URL addresses are provided that point to a trailer video clip for that content item, which can be downloaded from one or more trailer providers 160.

Electronic Program Guide (EPG) data provider 130 is configured to provide, via a transmission channel 153, additional data about content available from various sources, including the content available from the content delivery network 100 and the other content providers 140.

The content items for which the program guide is displayed may include live broadcast events and/or other content items, such as catch-up content, video-on-demand content, etc.

The transmission channels 151-154 may be of any known type, such as wired or wireless, using transmission technologies suitable to carry data of a particular service.

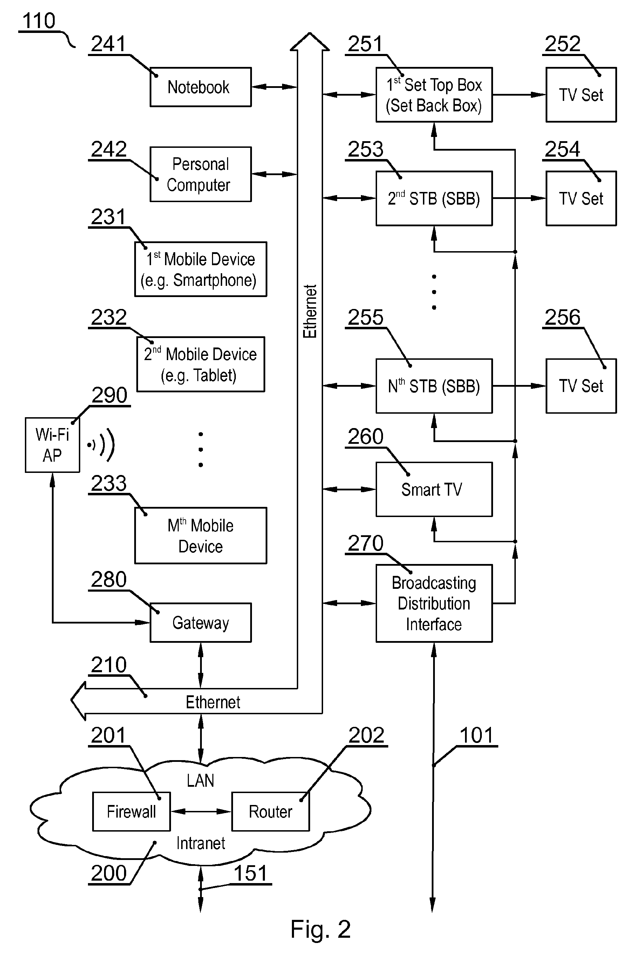

Fig. 2 presents an overview of a content distribution system at a user premises, such as at home or at an office. The user devices are connected to an Intranet - a local area network (LAN) 200 via an interface such as Ethernet (IP) 210, which is connected with the Internet 150 via the transmission channel 151. The LAN 200 preferably includes a firewall 201 and a router 202 configured to secure and coordinate data transmission. A gateway 280 may provide access to the Intranet 200 via a wireless access point (AP) 290, such as in Wi-Fi technology. A plurality of devices may be used in the user premises. Some of the devices may be mobile devices, such as a smartphone 231, a tablet 232 or another type of device 233. Other devices may be mobile or stationary and include devices such as a notebook computer 241, a personal computer 242, a Set Top Box (STB) or a Set Back Box (SBB) 251, 253, 255 connected to a television set 252, 254, 256, or a smart television set 260. A broadcasting distribution interface 270 may receive content from the content delivery network 100 via the transmission channel 101 and distribute it to the other devices via direct links or via the Ethernet interface.

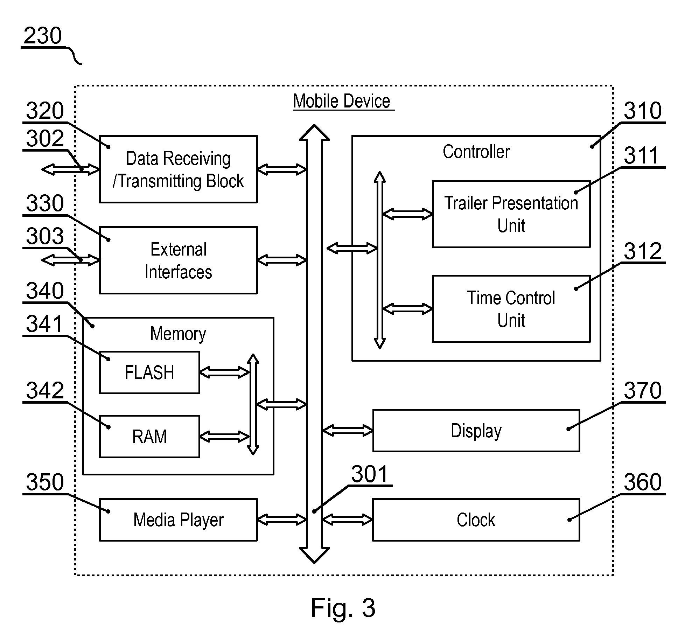

Fig. 3 presents a block diagram of a device 230, such as a tablet or smartphone, or a smart television, a notebook or a personal computer, at which the content presentation system can be implemented, and wherein mainly the elements essential for operation of the system of the invention are shown.

A data receiving/transmitting block 320 is configured to communicate, via at least one transmission channel 302, with the Ethernet (IP) network 210 or the wireless network, in order to receive content, applications and/or content data. The device may further comprise external interfaces 330 to communicate, via at least one communication channel 303, with other devices or accessories.

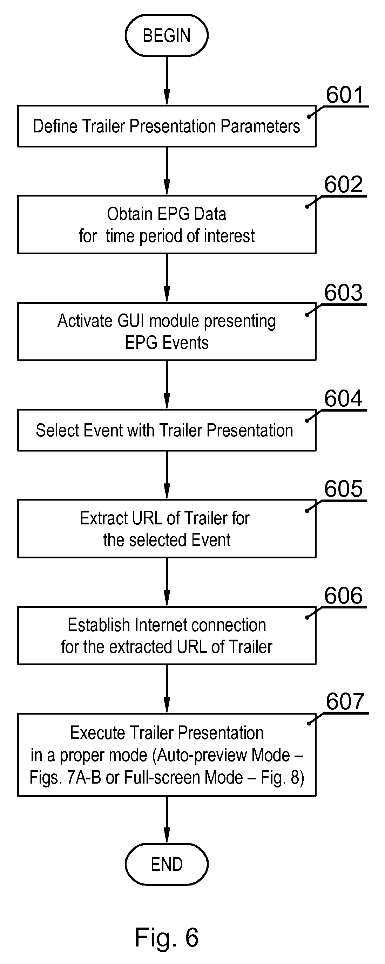

A controller 310 comprises a plurality of units configured to provide the functionality of the system as described herein. A trailer presentation unit is configured to perform the procedure of Fig. 6. A time control unit 312 is configured to measure times, in particular to measure the delay times before playing the trailer video clips. The units 311, 312 may be implemented as stand-alone or embedded hardware units or as software applications, such as applications downloadable from an external application server. The controller 310 operates utilizing memory blocks 340, including RAM 342 and Flash 341 blocks.

A clock module 360 is configured to provide timing data necessary e.g. to present content available at a current time.

A media player 350 is an example of a content presentation block that is configured to decode the received content and convert it to audio/video format suitable for presentation to the user.

The mobile device 230 typically includes its own display 370 for presenting content, typically a touch-type display which thereby also functions as an input controller.

All modules of the device communicate with each other via one or more internal data buses 301.

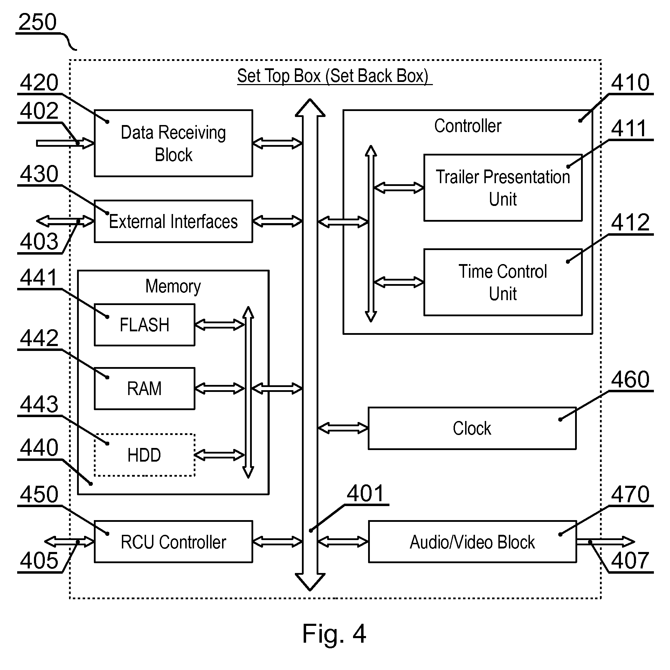

Fig. 4 presents a block diagram of a stationary device, such as a set top box or a set back box 250, at which the content presentation system can be implemented, and wherein mainly the elements essential for operation of the system of the invention are shown.

The elements 401, 410, 440, 460 are equivalent to the elements 301, 310, 340, 360 described with reference to the mobile device 230 of Fig. 3.

In addition, the memory block 440 may further comprise a hard disk drive (HDD) 443 or another type of mass storage that can be used to store video or other data locally at the device, but is not essential for its operation. For example, trailer video clips can be stored at the HDD 443, in order to improve their playback - for example, trailers which are most often watched by the users (as determined by the system operator according to system usage statistics) or trailers corresponding to content items of interest to the user (according to the user profile) can be downloaded to the local memory of the device, so that they are easily accessible at the device, e.g. when the Internet connection is slow or inoperative.

A data receiving block 420 is configured to receive downstream data, such as video content, from the broadcasting distribution interface 270 via a channel 402 (101). The data receiving block 420 (also called a front-end block) may comprise a plurality of tuners (such as satellite, cable, terrestrial or IPTV tuners), wherein one of the tuners receives content to be displayed at the television screen to which the device is directly connected (e.g. the STB 251 connected to the TV set 252) and another tuner receives content to be recorded at the HDD 443.

External interfaces 430, such as the Ethernet interface, are configured to communicate, via at least one transmission channel 403, with the Ethernet (IP) network 210 or the wireless network, in order to receive applications and/or content recommendation data, as well as to transmit user or device data.

The device is operable by the user via a remote control unit (RCU) that communicates, typically via a wireless transmission channel 405, with a RCU controller block 450.

An audio/video block 470 is an example of a content presentation block and configured to decode the received content, convert it to an audio/video format suitable for presentation to the user, and transmit the converted content via a transmission channel 407 to a TV set to which the device is directly connected.

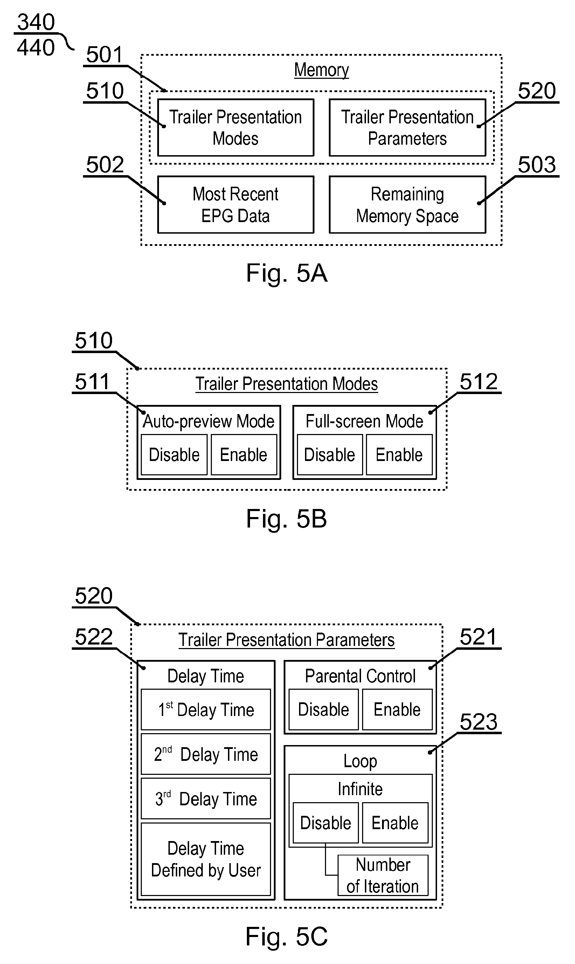

Fig. 5A presents data stored in user device memory 340, 440. Data is stored in containers, such as tables or other data types.

A data set 501 comprises a particular configuration, specifying a plurality of parameter types defined in data containers 510, 520. That configuration can be changed by the user of the device or remotely by a system operator. The data container 510 stores trailer presentation modes concerning the way in which the trailer can be presented to the user, as explained in details with reference to Fig. 5B. The data container 520 stores trailer presentation parameters concerning the configuration of trailer playback, as explained in details with reference to Fig. 5C. The data container 502 stores the most recent program guide data obtained from the EPG data provider 130. The other data space 503 can be used to store other data.

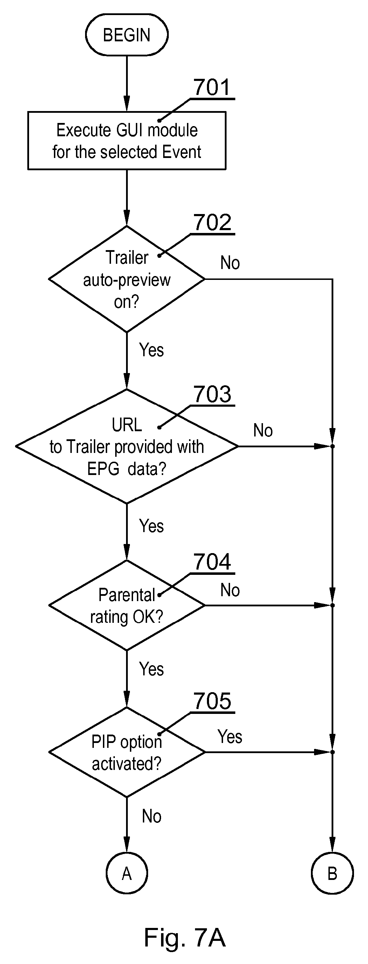

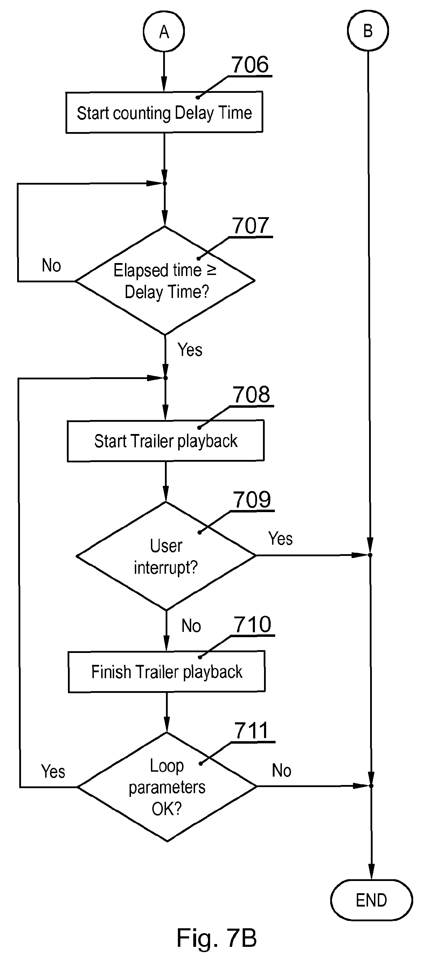

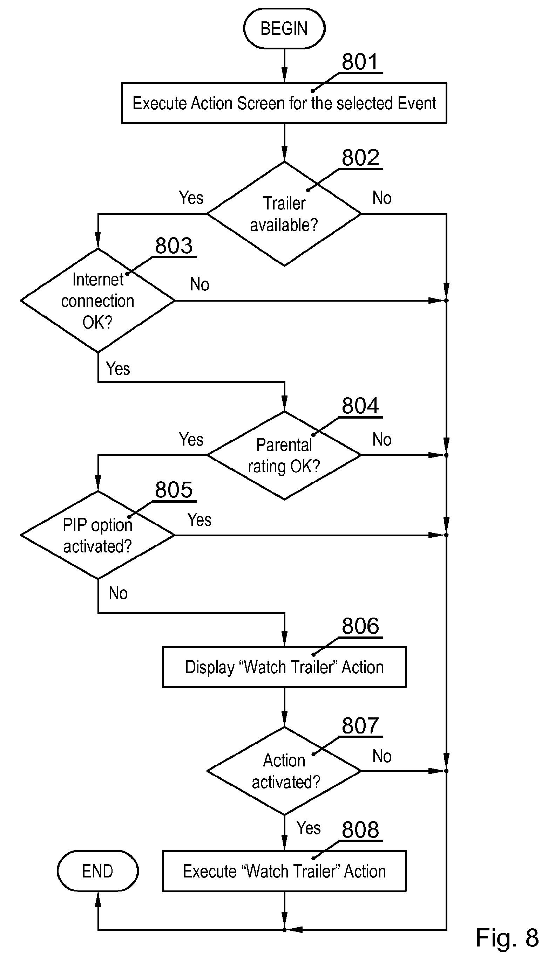

Fig. 5B presents configuration of trailer presentation modes. Two modes are presented herein: an auto-preview mode 511 as explained in details with reference to Figs. 7A-B and a full-screen mode 512 as explained in details with reference to Fig. 8. One or both modes can be active, depending on settings for the particular device or user.

Fig. 5C presents configuration of trailer presentation parameters. A parental control 521 may be active to prevent presentation of trailers for content items which do not correspond with the parental settings for that device or user. A delay time parameter 522 may comprise a plurality of predefined delay times and/or a time set by the user, which determine the delay before a playback of an item begins in step 706 of the auto-preview procedure of Figs. 7A-B. The delay allows the user to get acquainted with the other content description elements. For example, the delay times may be predefined as 1, 3 or 5 seconds. A loop parameter 523 defines the operation in step 711 of the auto-preview procedure of Figs. 7A-B. The parameters may have default values predefined for all content items, but these values may be also defined specifically for particular content items in extended content information for that content item.

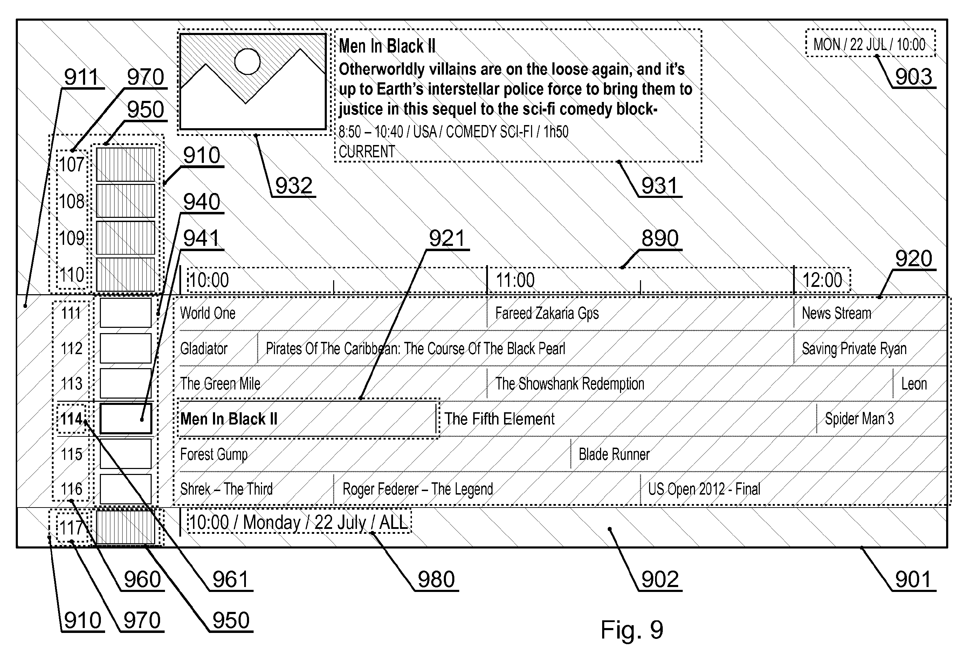

Fig. 6 presents in general a method for presenting extended content data in a form of a trailer video clip. The procedure starts in step 601 by defining trailer presentation parameters 520, as explained with reference to Fig. 5C. Next, in step 602, EPG data for the time period of interest is obtained from the EPG data provider 130. In step 603 the GUI (Graphical User interface) module is activated to present a user interface such as the one shown in Figs. 9-10A-B. In step 604 a content item is selected (e.g. by the user using the remote controller), for which a trailer shall be presented. The Trailer URL (Universal Resource Locator) is extracted in step 605 from the extended information available for that selected content item. Next, in step 606, the Internet connection is established for the address defined by the Trailer URL to obtain the content of the trailer video clip. Finally, in step 607, the trailer video clip is presented in a proper mode, as will be described below with reference to Figs. 7A-B for an auto-preview mode or with reference to Fig. 8 for a full-screen mode.

Figs. 7A-7B show a method for presentation of a trailer in an auto-preview mode. First, a GUI module for the selected content item is executed to allow presentation of data for the selected content item. Next, a plurality of conditions are checked to verify whether to play the trailer video clip. In step 702 it is checked whether the auto-preview mode 511 is enabled in the trailer presentation modes 510 configuration. In step 703 it is checked whether a URL to the trailer has been provided with the EPG data for the selected content item and whether this URL is valid and pointing to a playable video clip. In step 704 it is checked, if the parental control parameter 521 is enabled, whether the parental rating for the selected content item corresponds with the parental rating setting for the active user - if not, the trailer will not be played, as it may comprise content not appropriate to the user. Furthermore, it is checked in step 705 whether an inverted PIP (Picture-in-Picture) option is activated, and if so, the system can be configured not to play the trailer, such as not to distract the user by playing a plurality of videos at the same time. If the conditions checked are satisfactory, then the trailer playback is prepared, first by starting counting a selected delay time 522, as specified by the presentation parameters 520, in step 706. One of the predefined delay times may be selected depending on the type of content. For example, shorter delay time (e.g. the 1^{st} delay time, set e.g. to 0 seconds or 1 second) may be selected for content items for children (who typically do not read textual content descriptions but are more willing to watch a trailer). In contrast, longer delay time (e.g. the 3^{rd} delay time, set e.g. to 5 seconds) may be selected for documentary content items (where the user typically reads textual content description first and only then would be willing to watch the trailer). Furthermore, the delay time may be selected depending on the amount of textual content description available for the content item - for content items with a short description or no description at all, a shorter delay time may be selected than for content items with a longer description. After the delay time is elapsed in step 707, the trailer is played in step 708 until the user interrupts it in step 709 or until it finishes in step 710. Depending on the setting of the loop parameter 523, the trailer may be played once, a number of times or infinitely in a loop, according to a decision taken in step 711. During the payback of the trailer, the audio that is played may correspond to the audio of the trailer or to the audio of the currently active content item on the currently active channel.

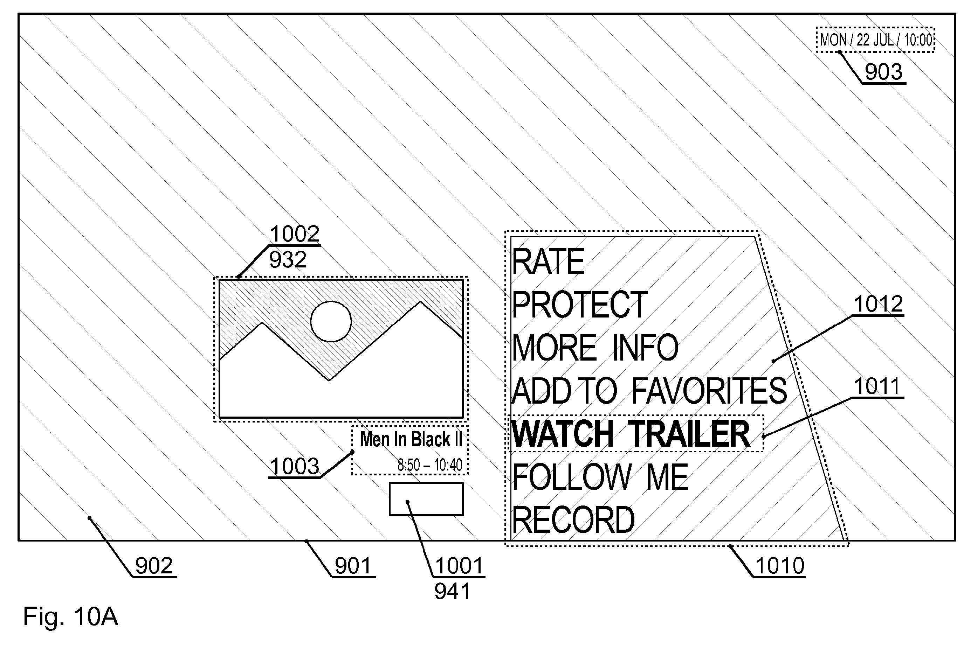

Fig. 8 shows a method for presentation of a trailer in a full-screen mode. In step 801 an action screen for the selected content item is executed, which lists actions that are available for that content item. An action allowing the user to watch a full-screen trailer is activated for that content item in step 806 if a plurality of conditions are confirmed: the trailer is available for that item, i.e. an URL is specified in the extended information for that item and points to a valid address (step 802), the Internet connection is operative (step 803), the parental rating for that content item corresponds with the user settings (step 804) and the PIP option is not activated (step 805). Otherwise, the action allowing the user to watch full-screen trailer is not active and the trailer is not available for that item. Once the user selects the action in step 807, it is activated and the trailer video clip is played in full screen mode, along with corresponding audio, as shown in Figs. 10A-10B.

Fig. 9 presents one embodiment of a program guide presentation scheme that allows auto-preview mode for watching trailers. The background 902 of the screen 901 may comprise an image or a video of the currently watched content. The presented program guide has a form of a grid, but the auto-preview mode can be also applied in an equivalent manner to other types of program guide configurations. In the presented grid, a list of channels 960, 970 is presented vertically. For a number of channels 960, a grid 920 is presented in the main portion 911 of the screen, listing content items 921 available on these channels in particular times, according to the timeline 890 and selected day 980 and current time 903. For each channel of the list 960, 970, a graphical icon 941 may be presented in a list 940, 950, such as a logo of that channel. For channels 970 outside the grid range, only the channel number and icon may be presented in supplementary portions 910 of the screen, to facilitate browsing the list. A user may select a particular channel 961 and a content item of interest 921 on that channel. For the selected content item, extended textual information 931 and graphical information 932 (such as a preview screen) is displayed. Within the graphical window 932, the trailer may be played.

Fig. 10A presents one embodiment of a program guide presentation scheme that allows auto-preview mode for watching trailers. The background 902 of the screen 901 may comprise an image or a video of the currently watched content. The screen can be activated by selecting an item of interest in the program guide mode (e.g. such as in Fig. 9) and asking for a list of actions available for that content item. Upon meeting the criteria of steps 802-805 of the procedure of Fig. 8, the "watch trailer" action 1011 becomes active in the list of actions 1012 in the screen portion 1010. That screen 901 may further comprise content information 1003, channel icon 1001 and graphical window 1002, wherein a snapshot graphics can be presented or a trailer video clip can be played.

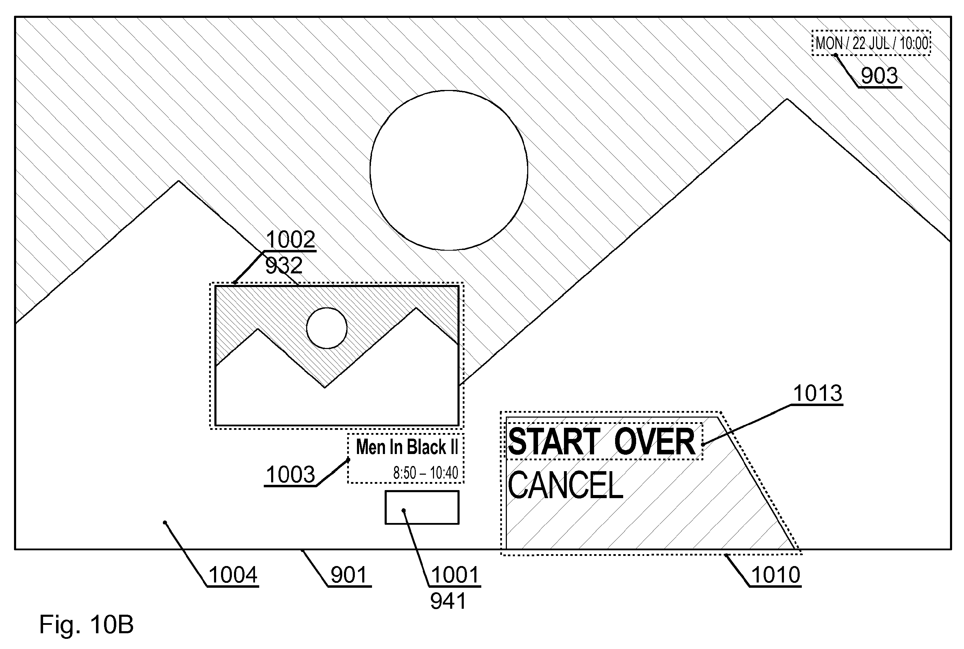

Fig. 10B presents an example configuration of screen after the full-screen playback of the trailer is finished on screen of Fig. 10A. In that case, a list of actions 1010 shows a selection enabling to start over 1013 the playback of the trailer or to cancel the full-screen playback and return to other GUI screens, e.g. the grid program guide.

It can be easily recognized, by one skilled in the art, that the aforementioned method for presentation of content may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for presenting content items to a user of a device having a network interface and a controller configured to generate a graphical user interface, the method comprising performing the following steps within the device:
- receiving (602), from a program guide data provider (130) accessible over the network (150), program guide data for a plurality of content items;
- generating (603) a graphical program guide to display program guide data for the plurality of content items;
- allowing the user to select (604) a content item of interest;
- extracting (605) from the program guide data, extended information for the selected content item;
- presenting the extended information for the selected content item;
**characterized by**:
- extracting (605) from the program guide data an URL for a trailer video clip accessible over the network (150) from a trailer video clip provider (160);
- accessing (606) the trailer video clip; and
- presenting (607) the trailer video clip for the selected content item.

2. The method according to claim 1, further comprising, prior to presenting (607) the trailer video clip, checking whether the parental rating for the selected content item complies with the parental settings for the user or the device.

3. The method according to any of previous claims, further comprising, prior to presenting (607) the trailer video clip, waiting (706, 707) for a predetermined delay time.

4. The method according to claim 3, wherein the delay time is selected from a plurality of predetermined delay times (522).

5. The method according to any of previous claims, comprising presenting (607) the trailer video clip in a loop.

6. The method according to any of previous claims, comprising presenting (607) the trailer video clip in a reduced window (932) within the program guide screen (901) along with program guide data.

7. The method according to any of claims 1-5, comprising presenting (607) the trailer video clip in a full-screen window (902).

8. The method according to any of previous claims, further comprising, upon accessing (606) the trailer video clip, storing the trailer video clip in the memory (443) of the device.

9. A non-transitory computer readable storage medium comprising instructions that, when executed by a computer, enable presenting content items to a user of a device in accordance with the method according to any of claims 1-8.

10. A device (230, 250) comprising:
- a network interface (320, 420) configured to allow communication with external services over a network (150); and
- a controller (310, 410) configured to generate a graphical user interface and to perform the steps of the method of any of claims 1-8.
